# FASCICULE DE BREVET EUROPEEN

(11) **EP 1 924 176 B1**
(45) Date de publication et mention de la délivrance du brevet: **07.01.2009**
(21) Numéro de dépôt: 06794183.1
(22) Date de dépôt: 12.07.2006
(51) Int. Cl.: A47J 31/06

(54) **MACHINE POUR PREPARER UNE INFUSION**
MASCHINE ZUR ZUBEREITUNG EINES AUFGUSSES
MACHINE FOR PREPARING AN INFUSION

(30) Priorité: 31.08.2005 FR 0508933
(43) Date de publication de la demande: 28.05.2008
(73) Titulaire: SEB S.A., 69130 Ecully (FR)
(72) Inventeur: MORIN, Gilles, 14210 Sainte Honorine du Fay (FR); BRUNEE, Gérard, 61250 Conde sur Sarthe (FR)
(74) Mandataire: Kiehl, Hubert
(86) Numéro de dépôt international: PCT/FR2006/001736
(87) Numéro de publication internationale: WO 2007/026059

(56) Documents cités:
- EP-A- 1 319 357
- WO-A-20/04023948
- CH-A5- 596 810
- DE-U1-6202004 018 77
- US-A1- 2004 107 841

## Description

La présente invention se rapporte à une machine pour préparer une infusion et notamment, mais non exclusivement, pour préparer du café.

Plus particulièrement, l'invention concerne une machine de préparation d'infusion comprenant une chambre d'infusion destinée à recevoir un produit à infuser et délimitée par une cuve inférieure et une tête dite de tassage supérieure qui sont mobiles l'une par rapport à l'autre, une alimentation de la chambre d'infusion en eau chaude sous pression, ladite tête de tassage comportant un conduit interne présentant une entrée communiquant avec la chambre d'infusion et permettant le passage de l'infusion à travers la tête de tassage selon une direction ascendante vers une sortie de distribution, et des moyens situés dans ledit conduit à proximité de son entrée et adaptés à former de la mousse dans l'infusion lors de son passage à travers la tête de tassage et à interdire le retour de l'infusion dans ladite chambre d'infusion.

Une telle machine est connue du document DE-U-20 2004 018 776 qui concerne une machine à café de type espresso comportant des moyens de formation de mousse agencés dans un conduit interne vertical de la tête de tassage. Ces moyens sont constitués par un clapet comprenant un siège formé dans la paroi du conduit interne, une bille de diamètre adapté pour reposer de manière étanche sur le siège, et un ressort de compression hélicoïdal associé à une butée et sollicitant la bille contre le siège. Comme indiqué dans ce document, ces moyens formant clapet permettent la formation de mousse dans le café. Ils interdisent également au café situé au-dessus de la bille de retourner dans la chambre après l'opération de percolation du fait de la sollicitation de la bille contre le siège par le ressort.

Toutefois, ces moyens formant clapet mettent en oeuvre plusieurs pièces onéreuses et difficiles à monter, et nécessitent un usinage précis dans le conduit interne de la tête de tassage pour former le siège contre lequel la bille puisse reposer de manière étanche. Ceci augmente bien entendu le coût de fabrication de la machine à café, surtout lorsque l'on cherche à produire celle-ci en grande série en réduisant au maximum les étapes de fabrication. L'efficacité de ces moyens formant clapet peut également diminuer après un grand nombre de cycles d'opération si des dépôts de café viennent à se former au niveau des pièces mobiles, notamment entre la bille et son siège.

La présente invention a pour but de pallier les inconvénients mentionnés ci-dessus en proposant des moyens permettant à la fois de former de la mousse dans l'infusion et d'interdire le retour de l'infusion contenue dans le conduit interne vers la chambre d'infusion, qui soient simples, peu coûteux et fiables.

A cet effet, la présente invention a pour objet une machine du type précité, caractérisée en ce que lesdits moyens sont formés par une pièce souple déformable percée d'au moins un orifice calibré pour former la moussue et interdire le retour de l'infusion.

Les moyens de formation de mousse et d'anti-retour de l'infusion sont ainsi formés par une pièce unique qui peut être réalisée en grande série à faible coût. L'encombrement de cette pièce est notablement réduit par rapport à un système de clapet à bille et à ressort, et elle présente une grande fiabilité du fait de l'absence de tout organe mobile dans sa structure. De plus, cette pièce est placée à proximité de l'entrée du conduit interne, voire à l'entrée même de celui-ci, et par conséquent le reliquat d'infusion susceptible de retourner dans la chambre d'infusion est quasi nul.

Dans des modes de réalisation préférés de l'invention, on a recours, en outre, à l'une et/ou à l'autre des dispositions suivantes :
- la pièce souple présente la forme d'une plaque ayant des faces inférieure et supérieure dans chacune desquelles débouche l'orifice, et le débouché de l'orifice dans ladite face inférieure présente une section supérieure à celle du débouché dudit orifice dans ladite face supérieure ;
- l'orifice a la forme d'une fente faiblement allongée, les débouchés dudit orifice dans les faces inférieure et supérieure de la plaque ayant une section sensiblement rectangulaire ;
- le débouché de l'orifice dans la face inférieure de la plaque présente une largeur comprise entre 0,5 et 1 mm et préférentiellement 0,8 mm, et une longueur comprise entre 1 et 2 mm et préférentiellement 1,4 mm, et le débouché de l'orifice dans la face supérieure de la plaque présente une largeur comprise entre 0,1 et 0,4 mm et préférentiellement 0,3 mm, et une longueur comprise entre 0,6 et 1,5 mm et préférentiellement 0,9 mm ;
- l'orifice calibré présente, depuis la face inférieure de la plaque jusqu'à sa face supérieure, une première portion de section continuellement décroissante, suivie d'une seconde portion de section constante ;
- l'orifice présente, de la face inférieure à la face supérieure de la plaque, une hauteur totale comprise entre 1,5 et 2,5 mm et préférentiellement 2 mm, la première portion de l'orifice présentant une hauteur comprise entre 1 et 1,5 mm et préférentiellement 1,3 mm, et la seconde portion de l'orifice présentant une hauteur comprise entre 0,4 et 1 mm et préférentiellement 0,7 mm ;
- l'orifice est constitué d'une cuvette sensiblement circulaire s'étendant depuis la face inférieure de la plaque et se prolongeant par un trou cylindrique sensiblement coaxial à ladite cuvette et s'étendant jusqu'à la face supérieure de la plaque ;
- le trou cylindrique présente une hauteur comprise entre 0,6 et 1,2 mm et préférentiellement 0,9 mm, et un diamètre compris entre 0,5 et 0,7 mm et préférentiellement 0,6 mm ;
- la pièce souple est réalisée en un silicone présentant une dureté shore comprise entre 60 et 70, et préférentiellement de 65 ;
- la pièce souple comporte au moins un organe de détrompage adapté à coopérer avec un relief correspondant de la tête de tassage.

D'autres caractéristiques et avantages de l'invention apparaîtront au cours de la description qui va, suivre, donnée à titre d'exemple non limitatif, en référence aux dessins annexés dans lesquels :
- la figure 1 est une vue en coupe simplifiée d'un groupe d'infusion d'une machine à café comportant une pièce souple de formation de mousse et d'anti-retour selon un premier mode de réalisation de l'invention ;
- la figure 2 est une vue à plus grande échelle du détail A de la figure 1 ;
- la figure 3 est une vue en perspective de la pièce souple réalisée selon le premier mode de réalisation ;
- la figure 4 est une vue de dessous de la pièce souple selon la flèche IV de la figure 3 ;
- la figure 5 est une vue de dessus de la pièce souple selon la flèche V de la figure 3 ;
- la figure 6 est une vue en coupe selon la ligne VI-VI de la figure 4 ; et
- la figure 7 est une vue analogue à la figure 6 d'un deuxième mode de réalisation de la pièce souple.

Sur les différentes figures, on a conservé des références identiques pour désigner des éléments identiques ou similaires.

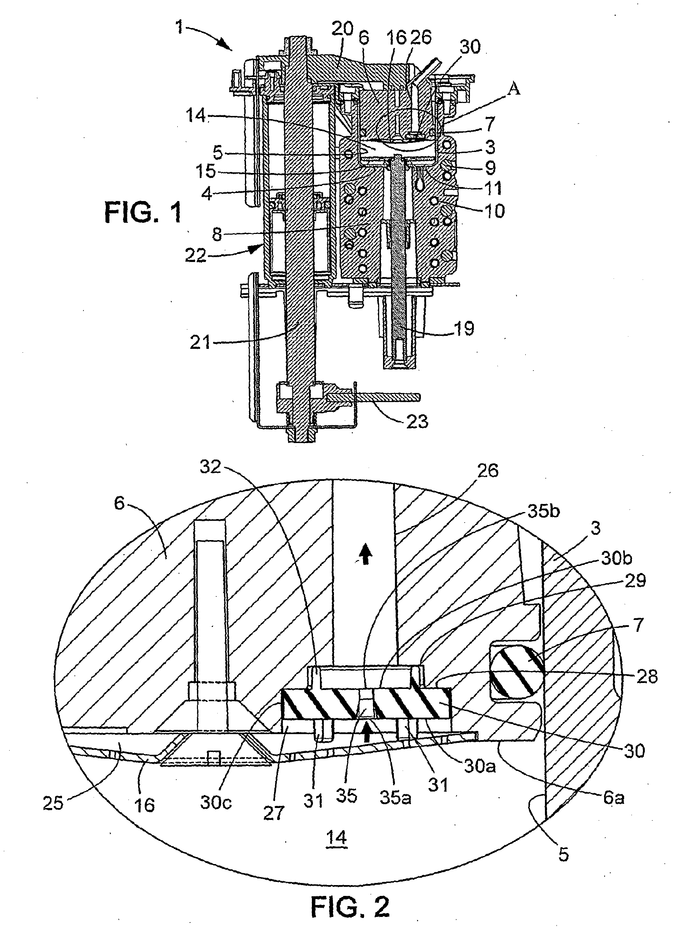

A la figure 1, est représenté un groupe d'infusion 1 qui est monté à l'intérieur d'un boîtier non représenté d'une machine pour préparer une infusion. Le groupe 1 est particulièrement destiné à préparer une infusion de café, mais il pourrait convenir aussi pour préparer du thé, du lait chaud, un mélange de ces boissons ou tout autre type d'infusion préparée en faisant passer de l'eau chaude à travers un produit à infuser pulvérulent.

Le groupe d'infusion 1 comprend une cuve inférieure 3 d'axe vertical présentant un fond 4 et une paroi interne cylindrique 5 le long de laquelle une tête de tassage supérieure 6 coulisse verticalement et de manière étanche grâce à un joint torique 7 prévu entre la périphérie de la tête de tassage 6 et la paroi interne 5 de la cuve 3.

Le groupe d'infusion 1 comprend également un bloc thermique 8, d'axe vertical, adapté à loger dans sa partie supérieure la cuve 3 et renfermant un élément chauffant électrique 9 et un conduit d'eau 10. Le conduit 10 est relié à un circuit d'eau par l'intermédiaire d'une pompe, non représentée, qui permet de mettre l'eau sous une pression de l'ordre de 15 bars. Le conduit 10 présente un débouché 11 situé dans le fond 4 de la cuve inférieure 3, qui forme une alimentation en eau chaude sous pression.

La tête de tassage 6 présente une face d'extrémité inférieure 6a, mieux visible à la figure 2, qui délimite avec une partie de la paroi cylindrique 5 et le fond 4 de la cuve 3, une chambre d'infusion 14 d'axe vertical. La chambre d'infusion 14 comporte une grille perforée inférieure 15 située du côté du fond 4 de la cuve 3 et une grille perforée supérieure 16 fixée par une vis contre la face d'extrémité 6a de la tête de tassage 6.

La grille perforée inférieure 15 supporte contre sa face supérieure le produit à infuser, à savoir de la mouture de café en vrac dans le présent mode de réalisation, et est traversée par l'eau chaude provenant du bloc thermique 8. La grille inférieure 15 est fixée sur une tige 19 montée coulissante à travers le bloc thermique 8, de sorte que la grille inférieure 15 peut être déplacée verticalement.

La grille supérieure 16 est en tout point analogue à la grille inférieure 15 et définit avec celle-ci la chambre d'infusion 14.

Comme représenté à la figure 1, la tête de tassage 6 est portée par un bras 20 fixé à un piston interne 21 d'un vérin hydraulique 22 qui permet de faire coulisser verticalement la tête de tassage supérieure 6 dans la chambre d'infusion 14 pour tasser la mouture contenue dans celle-ci.

Un doigt 23 est monté mobile autour de l'extrémité inférieure du piston 21 du vérin 22, et est destiné à coopérer avec l'extrémité inférieure de la tige 19 lors de la remontée du vérin pour remonter simultanément celle-ci et comprimer un ressort (non représenté) lié à la tige 19, de manière à déplacer vers le haut la grille inférieure 15.

Comme on le voit mieux à la figure 2, une chambre collectrice 25 est formée entre la face d'extrémité 6a de la tête de tassage 6 et la face supérieure de la grille perforée supérieure 16. D'autre part, un conduit 26 interne à la tête de tassage 6 s'étend verticalement à travers la tête de tassage depuis une entrée 27 située dans la chambre collectrice 25. Cette entrée 27 est constituée par le débouché du conduit interne 26 dans la portion de la face d'extrémité 6a de la tête de tassage qui délimite la chambre collectrice 25. Le conduit interne 26 est relié à sa sortie à des tubulures de sortie (non représentées) qui orientent le café vers l'extérieur où il est recueilli dans une ou plusieurs tasses.

Le fonctionnement du groupe d'infusion est brièvement décrit ci-après, mais pour plus de détail on pourra se référer au document WO-A-99/12457. Une séquence automatique de préparation d'un café commence à partir d'une position dans laquelle la tête de tassage 6 est relevée de manière à dégager la chambre d'infusion 14, et dans laquelle la grille perforée inférieure 14 est disposée à proximité du fond 4 de la cuve 3 dans une position abaissée telle que représentée à la figure 1. La mouture de café est alors déverséé par une goulotte, non représentée, dans la chambre d'infusion 14. Ensuite, la tête de tassage 6 est abaissée à l'aide du vérin hydraulique 22 jusqu'à prendre la position représentée à la figure 1. Au cours de ce mouvement d'abaissement, la mouture de café est tassée entre les grilles inférieure et supérieure (15, 16). De l'eau chaude sous pression est alors fournie à la chambre d'infusion 14 par le bloc thermique 8 et traverse la mouture selon un mouvement ascendant. La boisson obtenue est recueillie au-delà de la grille supérieure 16 dans la chambre collectrice 25, puis passe dans le conduit interne vertical 26 de la tête de tassage 6, et s'écoule par les tubulures de sortie dans une tasse à l'extérieur de la machine. Une fois l'opération d'infusion terminée, la tête de tassage 6 est remontée à sa position initiale à l'aide du vérin hydraulique 22. Lors de la remontée du vérin, le doigt mobile 23 coopère avec l'extrémité inférieure de la tige 19 pour remonter celle-ci en comprimant le ressort qui lui est associé. La grille inférieure 15 supportant la galette de mouture est déplacée vers le haut par la tige 19 pour venir occuper une position dans laquelle elle affleure avec le débouché de la cuve inférieure 3. La galette de mouture est alors éjectée dans un bac à mouture, par exemple au moyen d'une raclette non représentée. Une fois la galette de mouture évacuée, le doigt 23 pivote et libère l'extrémité inférieure de la tige. 19, de sorte que la grille inférieure 15 est rappelée dans sa position abaissée sous l'effet du ressort associé à la tige.

Comme cela est mieux visible sur la figure 2, une pièce 30 est agencée à proximité immédiate de l'entrée 27 du conduit interne 26 de la tête de tassage 6.

La pièce 30 est réalisée en un matériau souple et est déformable sous l'effet de l'augmentation de pression dans la chambre d'infusion 14 lorsque celle-ci est alimentée en eau chaude. De préférence, le matériau constituant cette pièce est un élastomère. Plus particulièrement, dans un mode de réalisation préféré, la pièce 30 est un silicone alimentaire qui présente une dureté shore comprise entre 60 et 70, et préférentiellement de 65, pour conférer à celle-ci une certaine déformation compte tenu des pressions d'utilisation. La pièce 30 en silicone est réalisée par moulage, ce qui permet avantageusement de la produire en grande série avec des dimensions précises et à faible coût.

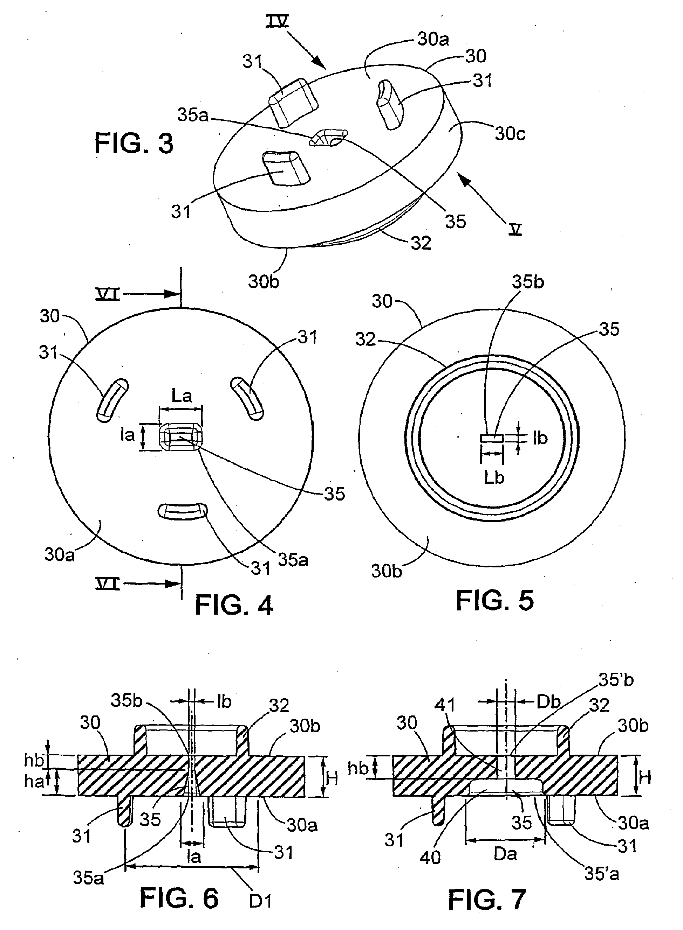

La pièce souple déformable 30, figures 2 et 3, est constituée par une plaque qui présente ici la forme d'un disque ayant une face inférieure 30a située du côté de la chambre d'infusion 14, une face supérieure 30b et une face latérale 30c de hauteur nettement inférieure aux dimensions desdites faces inférieure et supérieure.

Sur la figure 2, la périphérie de la face supérieure 30b de la pièce souple 30 est en appui contre un épaulement radial 28 formé dans le conduit 26, à proximité de l'entrée 27 de celui-ci. La face inférieure 30a de la pièce 30 comporte des plots saillants 31, mieux visibles sur la figure 3 ; dans le mode de réalisation représenté, les plots 31 sont au nombre de trois et sont disposés sur un cercle concentrique à la face inférieure 30a en étant répartis équiangulairement.

Lorsque la grille supérieure 16 est fixée à la tête de tassage 6, celle-ci vient en appui contre le sommet d'au moins une partie des plots 31, ce qui maintient la périphérie de la face supérieure 30b de la pièce 30 contre l'épaulement 28 du conduit 26. Ainsi, la pièce souple déformable 30 est montée dans la tête de tassage 6 sans avoir à recourir à des éléments supplémentaires de fixation.

La face supérieure 30b de la pièce 30 en forme de disque comporte, quant à elle, une projection annulaire cylindrique 32, mieux visible à la figure 2, qui est également concentrique à la face supérieure 30b. La projection 32 forme un moyen d'étanchéité entre le conduit interne 26 et la pièce 30 en venant en appui contre un rebord interne 29 situé au-dessus de l'épaulement 28, et/ou en venant s'emboîter dans la portion cylindrique du conduit situé entre l'épaulement 28 et le rebord 29.

La projection annulaire 32 forme également, avec les plots 31, des moyens de détrompage qui empêchent un montage inversé de la pièce souple 30, c'est-à-dire un montage avec la face supérieure 30b orientée vers le bas en direction de la chambre d'infusion 14. Dans ce but, le diamètre de la projection annulaire 32 et le diamètre de la portion du conduit interne 26 située entre l'épaulement 28 et le rebord 29, sont inférieurs au diamètre D1 (figure 6) du cercle sur lequel sont disposés les plots 31.

La pièce souple 30 est percée d'un orifice 35 qui constitue un passage pour l'infusion de la chambre collectrice 25 vers le conduit interne 26 dans lequel l'infusion passe selon une direction ascendante vers une sortie de distribution.

L'orifice 35 de la pièce 30 est calibré, d'une part, pour former de la mousse dans l'infusion lors de son passage dans le conduit interne vertical 26 de la tête de tassage 6, et d'autre part, pour interdire le retour de l'infusion contenue dans le conduit interne 26, au-dessus de la pièce 30, vers la chambre d'infusion 14 après l'opération d'infusion. L'orifice 35 doit pour cela présenter des dimensions et un profil particulier et la pièce souple 30 une déformation donnée. En effet, l'infusion sous pression venant de la chambre 14 doit subir une accélération et une perte de pression significative lors de son passage à travers l'orifice 35, afin d'obtenir de la mousse dans le jet d'infusion sortant par le débouché 35b de l'orifice 35 dans la face supérieure 30b. Toutefois, il ne faut pas que l'orifice 35 forme un obstacle trop important à l'écoulement de l'infusion vers la sortie de distribution, ce qui allongerait de manière inacceptable le temps de préparation d'un café, voire perturberait le fonctionnement de la machine. D'autre part, les caractéristiques de l'orifice 35 et de la pièce souple 30 doivent interdire le retour de l'infusion dans la chambre collectrice 25 sous l'effet du poids de la colonne d'infusion contenue dans le conduit 26, et ce de préférence même s'il règne une légère dépression dans la chambre d'infusion 14 ou une légère surpression dans le conduit interne 26. Dans ce but, il est naturel de réduire la section de passage de l'orifice 35.

La fonction d'anti-retour de la pièce 30 évite que de l'infusion ne retombe, après l'éjection de la galette de mouture, dans la chambre d'infusion vide 14. En effet, un tel retour provoquerait de la vapeur étant donné que le bloc thermique 8 reste à température élevée. La vapeur produite se condenserait ensuite sur d'autres parties de la machine, et notamment sur la goulotte d'alimentation en mouture. Or, la présence d'eau sur cette goulotte provoquerait un collage d'une partie de la mouture déversée, voire un colmatage de la goulotte après plusieurs cycles. On notera que l'infusion restant dans la chambre collectrice 25 après l'opération d'infusion est éliminée avec la galette de mouture.

Les fonctions de formation de mousse et d'anti-retour doivent donc répondre à des contraintes différentes nécessitant un calibrage précis de l'orifice 35 qui peut être déterminé à l'aide de nombreux essais conduisant notamment à adopter les caractéristiques dimensionnelles indiquées ci-après.

La Demanderesse a toutefois constaté qu'il était préférable d'adopter un orifice 35 dont le débouché 35a dans la face inférieure 30a de la pièce 30 présente une section supérieure à celle de son débouché 35b dans la face supérieure 30b. Ainsi, sous l'effet de la pression de l'infusion dans la chambre collectrice 25, la pièce 30 voit sa face supérieure 30b adopter un profil bombé qui a tendance à élargir le débouché supérieur 35b du fait de la souplesse du matériau, tandis que le débouché inférieur 35a forme toujours une ouverture du fait de sa section plus importante, même s'il a tendance à voir sa section se réduire du fait de la déformation de la pièce 30. Par contre, lorsque la pression exercée sur la face inférieure 30a de la pièce 30 est égale à la pression sur la face supérieure 30b, la section du débouché supérieur 35b est suffisamment petite pour retenir le liquide situé au-dessus de la pièce 30, notamment du fait de phénomènes de capillarité. De plus, si la face supérieure 30b de la pièce 30 présente un profil en creux en raison d'une différence de pression exercée entre les faces inférieure 30a et supérieure 30b, cette déformation a tendance à réduire la section du débouché supérieur 35b, éventuellement jusqu'à ce que les parois de l'orifice 35 viennent en contact, ce qui augmente encore la difficulté du retour de l'infusion vers la chambre d'infusion 14.

Il est préférable que l'orifice 35 soit situé au centre de la zone déformée de la pièce 30 lors du passage de l'infusion, et notamment au centre géométrique de la forme en disque de la pièce 30 des modes de réalisation représentés, pour que l'effet de variation des sections des débouchés (35a, 35b) joue pleinement. Toutefois, il n'est pas absolument nécessaire que la pièce 30 ait la forme d'un disque, étant donné que la zone déformée dépend également du montage de cette pièce dans le conduit 26.

Dans le premier mode de réalisation représenté aux figures 1 à 6, l'orifice 35 a la forme d'une fente faiblement allongée, c'est-à-dire dont la longueur n'excède pas de manière importante la largeur. Comme on peut le voir à la figure 5, le débouché 35b de l'orifice 35 dans la face supérieure 30b de la pièce 30 a une forme rectangulaire, tandis que le débouché 35a dudit orifice 35 dans la face inférieure 30a, visible sur la figure 4, a une forme globalement rectangulaire avec des coins arrondis, du fait de la présence d'un rayon de raccordement entre la face inférieure 30a et les parois internes de l'orifice 35. Il s'avère que l'orifice ainsi réalisé sous forme d'une fente permet de remplir correctement les fonctions de formation de mousse et d'anti-retour.

Il est apparu que les caractéristiques dimensionnelles suivantes de l'orifice 35 permettent de satisfaire les exigences fonctionnelles de la pièce souple 30.

Le débouché 35a de l'orifice 35 dans la face inférieure 30a de la pièce 30 en forme de disque, visible à la figure 4, présente une largeur la comprise entre 0,5 et 1 mm et préférentiellement 0,8 mm, et une longueur La comprise entre 1 et 2 mm et préférentiellement 1,4 mm. Par ailleurs, le débouché 35b de l'orifice 35 dans la face supérieure 30b de la pièce 30, visible à la figure 5, présente une largeur lb comprise entre 0,1 et 0,4 mm et préférentiellement 0,3 mm, et une longueur Lb comprise entre 0,6 et 1,5 mm et préférentiellement 0,9 mm.

Comme cela est mieux visible à la figure 6, l'orifice calibré 35 présente, depuis la face inférieure 30a jusqu'à la face supérieure 30b, une première portion de section continuellement décroissante, suivie d'une seconde portion de section constante. Plus particulièrement, la première portion de l'orifice 35 présente une hauteur ha comprise entre 1 et 1,5 mm et préférentiellement 1,3 mm, et la seconde portion de l'orifice présente une hauteur hb comprise entre 0,4 et 1 mm et préférentiellement 0,7 mm. La pièce 30 en forme de disque présente, quant à elle, une hauteur totale H comprise entre 1,5 et 2,5 mm et préférentiellement 2 mm.

Il est également possible de remplir correctement les fonctions de formation de mousse et d'anti-retour malgré une certaine dispersion des cotes de fabrication de la pièce souple 30, en adoptant par exemple le deuxième mode de réalisation représenté à la figure 7. Dans ce mode de réalisation, l'orifice 35 de la pièce 30 est constitué d'une cuvette 40, de préférence sensiblement circulaire, qui forme un large débouché 35'a de diamètre Da dans la face inférieure 30a de la pièce 30. La cuvette 40 est prolongée par un trou cylindrique 41, agencé de préférence coaxialement à ladite cuvette, qui s'étend jusqu'à la face supérieure 30b de la pièce 30 de manière à former un débouché 35'b dans celle-ci.

Dans ce deuxième mode de réalisation, la pièce 30 ayant comme précédemment la même hauteur H, le trou cylindrique 41 présente une hauteur hb comprise entre 0,6 et 1,2 mm et préférentiellement 0,9 mm, et un.diamètre Db compris entre 0,5 et 0,7 mm et préférentiellement 0,6 mm. La présence de la cuvette 40 confère plus de souplesse à la portion de la face supérieure 30b dans laquelle débouche le trou 41.

Bien entendu, les modes de réalisation décrits ne sont nullement limitatifs, et on notera que la pièce souple déformable 30, objet de l'invention, peut comporter un ou plusieurs orifices 35 de forme sensiblement différente à celles décrites. Toutefois, il s'avère que les indications géométriques données précédemment permettent de remplir correctement les fonctions de formation de mousse et d'anti-retour de manière efficace, malgré les possibles variations des conditions de fonctionnement d'une machine à l'autre et tout en respectant les contraintes liées à une fabrication industrielle en grande série.

## Revendications

1. Machine pour préparer une infusion comprenant une chambre d'infusion (14) destinée à recevoir un produit à infuser et délimitée par une cuve inférieure (3) et une tête dite de tassage supérieure (6) qui sont mobiles l'une par rapport à l'autre, une alimentation de la chambre d'infusion (14) en eau chaude sous pression, ladite tête de tassage (6) comportant un conduit interne (26) présentant une entrée (27) communiquant avec la chambre d'infusion (14) et permettant le passage de l'infusion à travers la tête de tassage (6) selon une direction ascendante vers une sortie de distribution, et des moyens (30) situés dans ledit conduit (26) à proximité de son entrée (27) et adaptés à former de la mousse dans l'infusion lors de son passage à travers la tête de tassage (6) et à interdire le retour de l'infusion dans ladite chambre d'infusion (14),
**caractérisée en ce que** lesdits moyens sont formés par une pièce souple déformable (30) percée d'au moins un orifice (35) calibré pour former la mousse et interdire le retour de l'infusion.

2. Machine selon la revendication 1, dans laquelle la pièce souple (30) présente la forme d'une plaque ayant des faces inférieure (30a) et supérieure (30b) dans chacune desquelles débouche l'orifice (35), et le débouché (35a;35'a) de l'orifice dans ladite face inférieure (30a) présente une section supérieure à celle du débouché (35b;35'b) dudit orifice dans ladite face supérieure (30b).

3. Machine selon la revendication 2, dans laquelle l'orifice (35) a la forme d'une fente faiblement allongée, les débouchés (35a,35b) dudit orifice dans les faces inférieure et supérieure (30a,30b) de la plaque (30) ayant une section sensiblement rectangulaire.

4. Machine selon la revendication 3, dans laquelle le débouché (35a) de l'orifice (35) dans la face inférieure (30a) de la plaque (30) présente une largeur (1a) comprise entre 0,5 et 1 mm et préférentiellement 0,8 mm, et une longueur (La) comprise entre 1 et 2 mm et préférentiellement 1,4 mm, et le débouché (35b) de l'orifice dans la face supérieure (30b) de la plaque (30) présente une largeur (lb) comprise entre 0,1 et 0,4 mm et préférentiellement 0,3 mm, et une longueur (Lb) comprise entre 0,6 et 1,5 mm et préférentiellement 0,9 mm.

5. Machine selon la revendication 4, dans laquelle l'orifice calibré (35) présente, depuis la face inférieure (30a) de la plaque (30) jusqu'à sa face supérieure (30b), une première portion de section continuellement décroissante, suivie d'une seconde portion de section constante.

6. Machine selon la revendication 5, dans laquelle l'orifice (35) présente, de la face inférieure (30a) à la face supérieure (30b) de la plaque, une hauteur totale (H) comprise entre 1,5 et 2,5 mm et préférentiellement 2 mm, la première portion de l'orificè présentant une hauteur (ha) comprise entre 1 et 1,5 mm et préférentiellement 1,3 mm, et la seconde portion de l'orifice présentant une hauteur (hb) comprise entre 0,4 et 1 mm et préférentiellement 0,7 mm.

7. Machine selon la revendication 2, dans laquelle l'orifice (35) est constitué d'une cuvette (40) sensiblement circulaire s'étendant depuis la face inférieure (30a) de la plaque (30) et se prolongeant par un trou cylindrique (41) sensiblement coaxial à ladite cuvette (40) et s'étendant jusqu'à la face supérieure (30b) de la plaque.

8. Machine selon la revendication 7, dans laquelle le trou cylindrique (41) présente une hauteur (hb) comprise entre 0,6 et 1,2 mm et préférentiellement 0,9 mm, et un diamètre (Db) compris entre 0,5 et 0,7 mm et préférentiellement 0,6 mm.

9. Machine selon l'une quelconque des revendications précédentes, dans laquelle la pièce souple (30) est réalisée en un silicone présentant une dureté shore comprise entre 60 et 70, et préférentiellement de 65.

10. Machine selon l'une quelconque des revendications précédentes, dans laquelle la pièce souple (30) comporte au moins un organe de détrompage (32) adapté à coopérer avec un relief correspondant (29) de la tête de tassage (6).

## Claims

1. Machine for preparing an infusion, comprising an infusion chamber (14) intended to receive a product to be infused and delimited by a bottom tank (3) and a so-called top tamping head (6) that are able to move with respect to each other, a supply of pressurised hot water to the infusion chamber (14), the said tamping head (6) comprising an internal pipe (26) having an inlet (27) communicating with the infusion chamber (14) and allowing passage of the infusion through the tamping head (6) in an upward direction towards a dispensing outlet, and means (30) situated in the said pipe (26) close to its inlet (27) and adapted to form foam in the infusion when it passes through the tamping head (6) and to prevent return of the infusion into the said infusion chamber (14),
**characterised in that** the said means are formed by a deformable flexible piece (30) with at least one orifice (35) in it calibrated to form the foam and prevent the return of the infusion.

2. Machine according to claim 1, in which the flexible piece (30) is in the form of a plate having bottom (30a) and top (30b) faces in each of which the orifice (35) emerges, and the outlet (35a; 35'a) of the orifice in the said bottom face (30a) has a cross section greater than that of the outlet (35b; 35'b) of the said orifice in the said top face (30b).

3. Machine according to claim 2, in which the orifice (35) is in the form of a slightly elongated slot, the outlets (35a, 35b) of the said orifice in the bottom and top faces (30a, 30b) of the plate (30) having a substantially rectangular cross section.

4. Machine according to claim 3, in which the outlet (35a) of the orifice (35) in the bottom face (30a) of the plate (30) has a width (la) of between 0.5 and 1 mm and preferentially 0.8 mm, and a length (La) of between 1 and 2 mm and preferentially 1.4 mm, and the outlet (35b) of the orifice in the top face (30b) of the plate (30) has a width (lb) of between 0.1 and 0.4 mm and preferentially 0.3 mm, and a length (Lb) of between 0.6 and 1.5 mm and preferentially 0.9 mm.

5. Machine according to claim 4, in which the calibrated orifice (35) has, from the bottom face (30a) of the plate (30) as far as its top face (30b), a first portion with a continuously decreasing cross section followed by a second portion with a constant cross section.

6. Machine according to claim 5, in which the orifice (35) has, from the bottom face (30a) to the top face (30b) of the plate, a total height (H) of between 1.5 and 2.5 mm and preferentially 2 mm, the first portion of the orifice having a height (ha) of between 1 and 1.5 mm and preferentially 1.3 mm, the second portion of the orifice having a height (hb) of between 0.4 and 1 mm and preferentially 0.7 mm.

7. Machine according to claim 2, in which the orifice (35) consists of a substantially circular bowl (40) extending from the bottom face (30a) of the plate (30) and extended by a cylindrical hole (41) substantially coaxial with the said bowl (40) and extending as far as the top face (30b) of the plate.

8. Machine according to claim 7, in which the cylindrical hole (41) has a height (hb) of between 0.6 and 1.2 mm and preferentially 0.9 mm, and a diameter (Db) of between 0.5 and 0.7 mm and preferentially 0.6 mm.

9. Machine according to any one of the preceding claims, in which the flexible piece (30) is produced from a silicone having a Shore hardness of between 60 and 70, and preferentially 65.

10. Machine according to any one of the preceding claims, in which the flexible piece (30) has at least one positive location member (32) adapted to cooperate with a corresponding relief (29) on the tamping head (6).

## Patentansprüche

1. Maschine zur Zubereitung eines Aufgusses mit einer Aufgusskammer (14), die zum Aufnehmen eines aufzugießenden Produktes bestimmt ist und durch eine untere Wanne (3) und einen oberen Presskopf (6), welche relativ zueinander beweglich sind, begrenzt ist, einer Versorgung der Aufgusskammer (14) mit unter Druck stehendem warmen Wasser, wobei der Presskopf (6) eine innen liegende Leitung (26) aufweist, welche einen Eingang (27) in Verbindung mit der Aufgusskammer (14) darstellt und den Durchgang des Aufgusses durch den Presskopf (6) entlang einer in Richtung eines Ausgabeausgangs ansteigenden Richtung erlaubt, sowie Mittel (30), welche in der Leitung (26) in der Nähe ihres Eingangs (27) liegen und dazu geeignet sind, den Schaum in dem Aufguss zu bilden, wenn dieser durch den Presskopf (6) geht, und den Rückstrom des Aufgusses in die Aufgusskammer (14) zu verhindern, **dadurch gekennzeichnet, dass** diese Mittel durch ein flexibles verformbares Teil (30) gebildet sind, welches mit wenigstens einer Öffnung (35) durchbohrt ist, die bemessen ist, um den Schaum zu bilden und den Rückstrom des Aufgusses zu verhindern.

2. Maschine nach Anspruch 1, wobei das flexible Teil (30) die Form einer Platte aufweist, die eine Unterseite (30a) und eine Oberseite (30b) hat, in denen jeweils die Öffnung (35) mündet, und dass die Mündung (35a, 35'a) der Öffnung in der Unterseite (30a) einen größeren Querschnitt hat als die Mündung (35b, 35'b) der Öffnung in der Oberseite (30b).

3. Maschine nach Anspruch 2, wobei die Öffnung (35) die Form eines leicht länglichen Schlitzes hat, wobei die Mündungen (35a, 35b) der Öffnung in der Unterseite und der Oberseite (30a, 30b) der Platte (30) einen ungefähr rechteckigen Querschnitt haben.

4. Maschine nach Anspruch 3, wobei die Mündung (35a) der Öffnung (35) in der Unterseite (30a) der Platte (30) eine Breite (la) im Bereich zwischen 0,5 und 1 mm und vorzugsweise von 0,8 mm und eine Länge (La) im Bereich zwischen 1 und 2 mm und vorzugsweise von 1,4 mm hat und die Mündung (35b) der Öffnung in der Oberseite (30b) der Platte (30) eine Breite (lb) im Bereich von 0,1 bis 0,4 mm und vorzugsweise von 0,3 mm hat und eine Länge (Lb) im Bereich von 0,6 bis 1,5 mm und vorzugsweise von 0,9 mm hat.

5. Maschine nach Anspruch 4, wobei die bemessene Öffnung (35) von der Unterseite (30a) der Platte (30) bis zur Oberseite (30b) einen ersten Abschnitt mit kontinuierlich abnehmendem Querschnitt gefolgt von einem zweiten Abschnitt mit konstantem Querschnitt aufweist.

6. Maschine nach Anspruch 5, wobei die Öffnung (35) von der Unterseite (30a) zur Oberseite (30b) der Platte eine Gesamthöhe (H) im Bereich von 1,5 bis 2,5 mm und vorzugsweise von 2 mm hat, wobei der erste Abschnitt der Öffnung eine Höhe (ha) im Bereich von 1 bis 1,5 mm und vorzugsweise von 1,3 mm hat und der zweite Abschnitt der Öffnung eine Höhe (hb) im Bereich von 0,4 bis 1 mm und vorzugsweise von 0,7 mm hat.

7. Maschine nach Anspruch 2, wobei die Öffnung (35) von der Unterseite (30a) der Platte (30) aus durch eine im Wesentlichen kreisförmige Senke gebildet wird, welche sich in einem zylindrischen Loch (41) fortsetzt, welches zu der Senke (40) im Wesentlichen koaxial ist und sich bis zur Oberseite (30b) der Platte erstreckt.

8. Maschine nach Anspruch 7, wobei das zylindrische Loch (41) eine Höhe (hb) im Bereich von 0,6 bis 1,2 mm und vorzugsweise von 0,9 mm aufweist und einen Durchmesser (Db) im Bereich von 0,5 bis 0,7 mm und vorzugsweise von 0,6 mm aufweist.

9. Maschine nach einem der vorangehenden Ansprüche, wobei das flexible Teil (30) aus Silikon mit einer Shore-Härte im Bereich von 60 bis 70 und vorzugsweise von 65 aufweist.

10. Maschine nach einem der vorangehenden Ansprüche, wobei das flexible Teil (30) wenigstens ein Unverwechselbarkeitselement (32) aufweist, das dazu eingerichtet ist, mit einer entsprechenden Kontur (29) des Presskopfes (6) zusammenzuwirken.
